# EUROPEAN PATENT APPLICATION

(11) **EP 1 578 181 A1**
(43) Date of publication of application: **21.09.2005**
(21) Application number: 03768324.0
(22) Date of filing: 26.12.2003
(51) Int. Cl.: H05K 5/02

(54) **HINGE DEVICE, HINGE UNIT, AND ELECTRONIC DEVICE**

(30) Priority: 27.12.2002 JP 2002381871
(71) Applicant: Olympus Corporation, Tokyo 151-0072 (JP); Strawberry Corporation, Saitama 350-1123 (JP)
(72) Inventor: NADA, Yoshiyuki, Hachioji-shi, Tokyo 192-0032 (JP); YAMADA, Hiroyuki, Hachioji-shi, Tokyo 193-0823 (JP); MORI, Takeshi, Machida-shi, Tokyo 194-0201 (JP); HOSONO, Hiroo, Machida-shi, Tokyo 194-0212 (JP); KUBOTA, Naoki, Kashiwazaki-shi, Niigata 945-0072 (JP); HAYASHI, Yoshitaka, Nagaoka-shi, Niigata 950-0003 (JP); TSUCHIDA, Takashi, Nagaoka-shi, Niigata 940-0048 (JP)
(74) Representative: von Hellfeld, Axel
(86) International application number: PCT/JP2003/016963
(87) International publication number: WO 2004/062330

(57) **Abstract**

A bearing (10) is arranged in a first link section that is by turn arranged in a first member of an electronic appliance, while a rotary shaft section is arranged in a second link section that is by turn arranged in a second member of the electronic appliance and rotatably engaged with the bearing (10). The rotary shaft section is provided with a hollow section for arranging a functional member that relates to a function of the electronic appliance and a cam plate (14), while the bearing (10) is provided with a cam engaging section to be engaged with the cam plate (14) for projection/recess engagement. One of the cam plate (14) and the cam engaging section is movable so as to axially move away from the other of the cam section and the cam engaging plate, against the urging force of a spring (16). As the rotary shaft section is rotated relative to the bearing (10), the cam plate (14) is driven to rotate relative to the cam engaging section and becomes engaged with the cam engaging section for projection/recess engagement.

## Description

### Technical Field

This invention relates to a hinge device and a hinge unit for freely rotatably linking a first member and a second member for an electronic appliance and also to an electric appliance comprising such a hinge device.

### Background Art

Jpn. Pat. Appln. KOKAI No. 8-22343 discloses an information processing apparatus comprising a display section and an operation section (keyboard section) that are liked to each other by means of a hinge section as in the case of a note type personal computer, the hinge section containing an image pickup optical system, a lens section being arranged at an end thereof.

Jpn. Pat. Appln. KOKAI No. 2001-169166 discloses a portable terminal apparatus comprising a main body section and a flip section including a monitor screen that are linked to each other by means of a freely rotatable shaft section, an image pickup lens being arranged in the longitudinal direction in the shaft section.

The above-cited Jpn. Pat. Appln. KOKAI Nos. 8-22343 and 2001-169166 describe a hinge section that is equipped with a camera. However, the hinge mechanism and the camera are separate components that are arranged separately in the rotary shaft section of a cabinet that can be opened and closed in either patent document. In other words, the hinge mechanism and the camera require respective spaces in the rotary shaft width direction and hence the appliance comprising a cabinet that can be opened and closed inevitably has large dimensions.

It is obvious that such a problem is dissolved when a camera and/or some other functional members are contained in a hinge section.

### Disclosure of Invention

An object of the present invention is to provide a hinge device and a hinge unit that can contain one or more than one part or all of functional members relating to certain functions of an electronic appliance or the functions added to the electronic appliance and also to provide an electronic appliance having such a hinge device.

According to an aspect of a hinge device of the present invention, there is provided a hinge device for an electronic appliance for rotatably linking a first member and a second member, characterized in that
a bearing section is arranged on one of the first member and the second member and a rotary shaft section is arranged on the other member, the rotary shaft section being rotatably engaged with the bearing section; and
the rotary shaft section is provided with a hollow section for arranging a functional member relating to a function of the electronic appliance to which the hinge device is applied.

According to an aspect of a hinge unit of the present invention, there is provided a hinge unit for an electronic appliance for rotatably linking a first member and a second member, characterized in that
a bearing section is arranged on one of the first member and the second member and a rotary shaft section is arranged on the other member, the rotary shaft section being rotatably engaged with the bearing section;
the rotary shaft section is provided with a hollow section; and
a functional member relating to a function of the electronic appliance to which the hinge device is applied is arranged in the hollow section.

According to an aspect of an electronic appliance of the present invention, there is provided an electronic appliance having a hinge device adapted to link a main body section provided with an operating section and an overlying section provided with a display section so as to lay the overlying section on the operating section so as to cover the operating section while the operating section being not in use but expose the operating section by rotating the overlying section from the overlying position relative to the operating section, characterized in that
the hinge device includes a bearing section arranged on one of the main body section and the overlying section and a rotary shaft section arranged on the other section, the rotary shaft section being rotatably engaged with the bearing section; and
the rotary shaft section is provided with a hollow section for arranging a functional member relating to a function of the electronic appliance.

### Brief Description of Drawings

FIG. 1 is a schematic cross sectional view of a first embodiment of hinge device according to the invention;
FIG. 2 is a schematic lateral view of the hinge device of FIG. 1 in a state where the spring and the E-ring thereof are removed;
FIG. 3 is a schematic cross sectional view of a second embodiment of hinge device according to the invention;
FIG. 4 is a schematic cross sectional view of a camera unit illustrated as an example of functional member relating to a function of an electronic appliance;
FIG. 5 is a schematic view of the camera unit of FIG. 4 as seen from the side of the lens surface;
FIG. 6 is a schematic cross sectional view of the spacer of the camera unit;
FIG. 7 is a schematic cross sectional view of a first embodiment of hinge unit according to the invention that is realized by using the first embodiment of hinge device;
FIG. 8 is a schematic cross sectional view of the first embodiment of hinge unit according to the invention that is realized by using the second embodiment of hinge device;
FIG. 9 is a schematic plan view of the light receiving section of the image sensor, showing the dimensions thereof;
FIG. 10 is a schematic cross sectional view of a second embodiment of hinge unit according to the invention;
FIG. 11 is a schematic cross sectional view of a third embodiment of hinge device and a third embodiment of hinge unit according to the invention, illustrating the configuration thereof;
FIG. 12 is a schematic perspective view of a first embodiment of electronic appliance according to the invention, showing its appearance;
FIG. 13 is a schematic perspective view of the pivot section of the embodiment of FIG. 12;
FIG. 14 is a schematic perspective view of a second embodiment of electronic appliance according to the invention, which is a foldable portable phone equipped with a camera unit in a state of being ready for use;
FIG. 15 is an exploded schematic perspective view of a hinge unit according to the invention, illustrating how it is assembled;
FIG. 16 is a schematic perspective view of the hinge unit of FIG. 15 that is assembled;
FIG. 17 is a schematic cross sectional view of a fourth embodiment of hinge device and a fourth embodiment of hinge unit according to the invention, illustrating the configuration thereof;
FIG. 18 is a schematic partial cross sectional view of a fifth embodiment of hinge device according to the invention, illustrating the configuration thereof;
FIG. 19 is a schematic cross sectional view of a sixth embodiment of hinge device and a sixth embodiment of hinge unit according to the invention, illustrating the configuration thereof;
FIG. 20 is a schematic cross sectional view of the embodiment of FIG. 19, showing the view angle thereof when the conversion lens is removed;
FIG. 21 is a schematic cross sectional view of a seventh embodiment of hinge device and a seventh embodiment of hinge unit according to the invention, illustrating the configuration thereof; and
FIG. 22 is a schematic perspective view of the hinge device and the hinge unit of FIG. 21.

### Best Mode for Carrying Out the Invention

Now, preferred embodiments of the present invention will be described by referring to the accompanying drawings.

### [First Embodiment of Hinge Device]

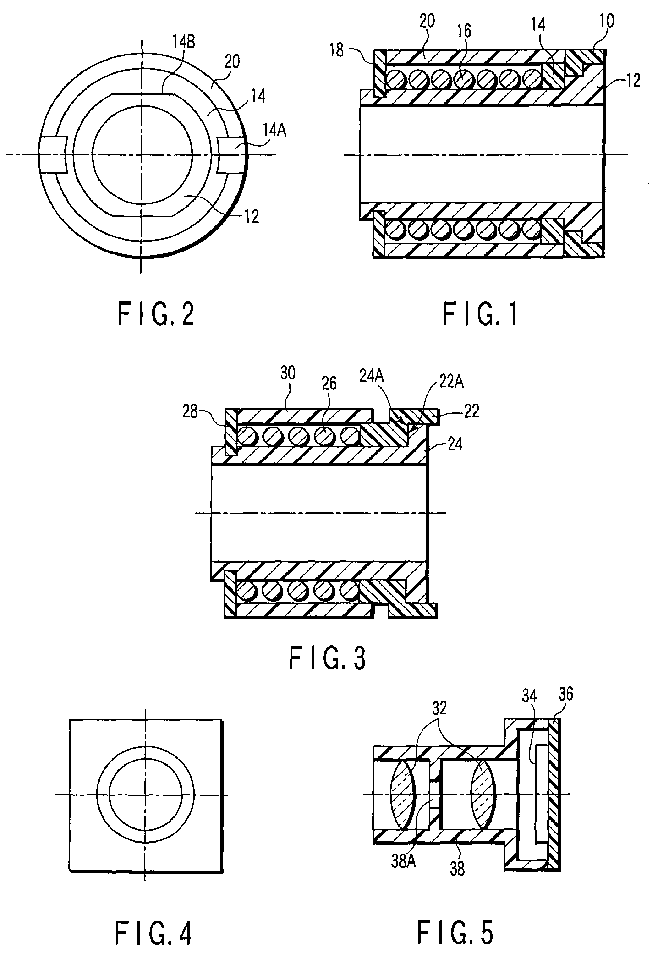

As shown in FIG. 1, in this embodiment of hinge device, a bearing 10 is rotatably fitted onto a hollow shaft 12. A cam plate 14 is also fitted onto the hollow shaft 12.

As shown in FIG. 2, the cam plate 14 is a substantially circular plate-shaped member that is provided with cam sections 14A formed thereon. The cam sections 14A may have an axially convex profile. The cam plate 14 has a revolution restricting section 14B in a small diameter area thereof. The hollow shaft 12 is formed to show a profile corresponding to that of the revolution restricting section 14B. With this arrangement, the hollow shaft 12 and the cam plate 14 are combined in such a way that they cannot rotate but are axially movable relative to each other.

On the other hand, though not shown, the bearing 10 is provided with a number of cam facets on the surface thereof located vis-à-vis the cam plate 14 so as to be engaged with each other. The cam facets formed on the bearing 10 are arranged at predetermined positions that make them to be engaged with the corresponding surface of the cam plate 14 as the hollow shaft 12 and the bearing 10 revolve relative to each other.

A spring 16 is arranged around the hollow shaft 12 in a compressed state relative to its free length in such a way that it can be compressed and expanded. The spring 16 is restricted against expansion at an end thereof by the cam plate 14 and at the opposite end by an E-ring 18 fitted to the hollow shaft 12 as anti-release member for the spring 16. Therefore, the cam plate 14 is pressed against the bearing 10 by the spring 16. While the spring 16 is a coil spring in this embodiment, it may alternatively be a coned disk spring. A coned disk spring may be used for the cam plate itself.

Thus, as long as the cam sections 14A of the cam plate 14 and the cam facets (not shown) formed on the bearing 10 are engaged with each other, they are restricted against revolution.

As a user applies force to make the hollow shaft 12 and the bearing 10 revolve relative to each other, the cam sections 14A of the cam plate 14 and the cam facets formed on the bearing 10 are subjected to the force trying to disengage them from each other. As a result, the cam plate 14 is driven to move against the spring force of the spring 16 in the leftward direction in FIG. 1.

As the hollow shaft 12 and the bearing 10 are forced to revolve further, the cam plate 14 and the bearing 10 are driven to revolve relative to each other against the frictional force generated by the resilience of the spring 16. As the cam sections 14A approach the respective next cam facets formed on the bearing 10, they are drawn to each other so as to become engaged with each other without any external force trying to revolve them further because of the cam effect. The cam plate 14 and the bearing 10 are brought into a stabilized state when the cam sections 14A and the respective next cam facets are engaged with each other. The engagement and the disengagement of the cam give a sensation of click to the user.

Since the cam plate 14 is axially movable relative to the hollow shaft 12, the hollow shaft 12 and the bearing 10 do not move axially relative to each other if a sensation of click is generated when the hollow shaft 12 and the bearing 10 are forced to revolve relative to each other.

The above-described axial movement is reversible. The stabilized engagement position of the cam and the feeling of operation that involves the above-described sensation of click are defined by the specifications of the electronic appliance for which the hinge device is used. Then, the spring force, the cam profile and the cam position are defined accordingly.

Sleeve 20 is provided with slits or grooves (not shown) on the inner wall surface thereof that are to be engaged with the cam sections 14A of the cam plate 14 in order to make the sleeve 20 not revolvable relative to the cam plate 14. It is arranged around the spring 16 and held in position by the anti-release E-ring 18. It may be needless to say that the slits are arranged axially at regular intervals so as to not obstruct any axial movement of the cam plate 14. With the above-described arrangement, the sleeve 20 cannot revolve relative to the hollow shaft 12 by way of the cam plate 14.

By forming a hinge device having a click mechanism around the hollow shaft 12, it is possible to contain one or more than one functional members relating to certain functions of the electronic appliance, for which the hinge device is used, in the hollow shaft 12. In other words, the radial and axial spaces of the rotary shaft of the appliance can be effectively exploited.

### [Second Embodiment of Hinge Device]

The second embodiment of hinge device according to the invention is realized without using a cam plate.

As shown in FIG. 3, a bearing 22 is fitted to a hollow shaft 24 in such a way that the bearing 22 can rotate around and move axially relative to the hollow shaft 24 in this embodiment of hinge device. Additionally, hollow shaft 24 is provided with cam sections 24A, while the bearing 22 is also provided with cam sections 22A at appropriate positions where they are engaged with the respective cam sections 24A. A spring 26 is arranged around the hollow shaft 24 and anchored by an E-ring 28 so as to press the bearing 22. The E-ring 28 and a sleeve 30 are arranged in such a way that both of them cannot revolve relative to the hollow shaft 24. More specifically, it is sufficient for the E-ring 28 and the sleeve 30 to be unable to revolve relative to the hollow shaft 24 and the E-ring 28 respectively. Although not shown, they may be provided with respective anti-revolution sections that are engaged with each other in order to make them unable to revolve relative to each other.

With the above-described arrangement, as the bearing 22 is driven to revolve relative to the hollow shaft 24, the cam is disengaged when the bearing 22 is moved axially against the resilience of the spring 26. Otherwise, the hinge device of this embodiment operates same as the hinge device of the first embodiment.

### [First Embodiment of Hinge Unit]

FIGS. 4 and 5 illustrates a functional member of an electronic appliance, which is a camera unit having one of the functions of the electronic appliance. The camera unit comprises a lens group 32, an image sensor 34, a lid plate 36 and a lens barrel 38. The lens group 32 forms an image of the object of shooting on the image sensor 34. The image sensor 34 converts the image into electric data. The lid plate 36 is a substrate on which the image sensor 34 is mounted. The lens barrel 38 takes a role of holding the lens group 32 and the image sensor 34 at respective predetermined positions. The lens barrel 38 has a diaphragm 38A. Although not shown, the lens barrel 38 may be formed by combining a lens holding section, a diaphragm, a sensor holding section and so on.

The camera unit is produced by rigidly bonding the lens barrel 38 and the lid plate 36 to each other, rigidly fitting the lens group 32 to the lens barrel 38 by a predetermined means and mounting the image sensor 34 on the lid plate 36. While the lid plate 36 and the lens barrel 38 are rigidly bonded to each other in the above description, the lens barrel 38 and the image sensor 34 may alternatively and directly be fixed to each other. Although not shown, it may be needless to say that wires connecting the camera unit to the electronic appliance, on which camera unit is mounted, are extended from the lid plate 36.

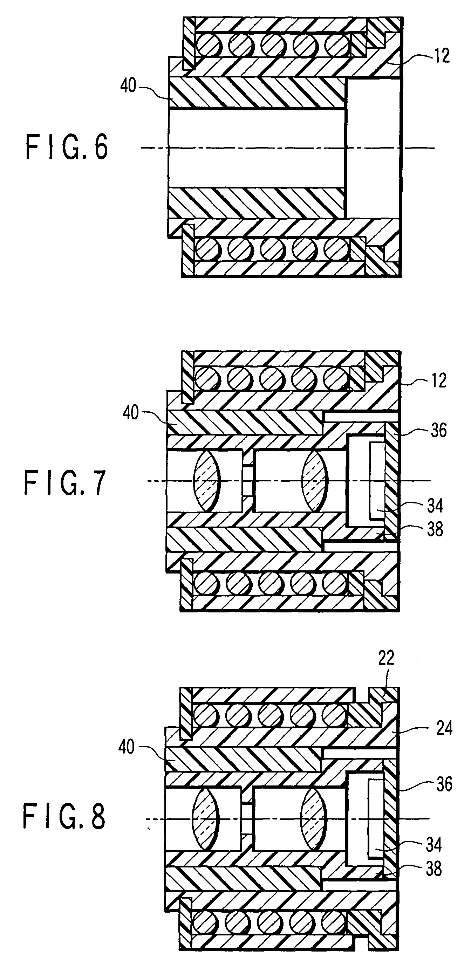

As shown in FIG. 6, a spacer 40 may have to be arranged in the hollow shaft 12 of the hinge device of the first or second embodiment in order to mount the camera unit, which is a functional member, in the hinge device. In other words, the camera unit may be mounted in the internal space of the hollow shaft 12 other than the space that is limited by the spacer 40. Each of the spacer 40 and the camera unit may be mounted in the hinge device by bonding, by means of screws, by press fit or the like. Of course, the spacer 40 and the hollow shaft 12 may be formed integrally. The use of a spacer 40 provides an advantage that any of various functional members may be mounted in the hollow shaft 12 by selecting an appropriately shaped spacer 40 in accordance with the external profile of the functional member.

Thus, as shown in FIG. 7, the hinge unit of the first embodiment is realized by mounting the camera unit, which is a functional member as shown in FIGS. 4 and 5, in the inside of the hollow shaft 12 of the hinge device that contains a spacer 40 in it so as to unitize the camera unit and the hinge device.

While FIG. 7 illustrates the hinge unit of the first embodiment according to the invention that is realized by using the hinge device of the first embodiment, FIG. 8 illustrates the hinge unit of the first embodiment according to the invention that is realized by using the hinge device of the second embodiment as shown in FIG. 3.

Thus, the hinge unit of the first embodiment can improve the efficiency of utilizing the space of an electronic appliance, the feeling of ease of operation of opening and closing the electronic appliance and the efficiency of assembling the electronic appliance and also downsize the electronic appliance because the shaft of the hinge section for opening and closing the cabinet is provided with a hollow section and a functional member of the electronic appliance, for which the hinge is used, is contained in the hollow section.

### [Second Embodiment of Hinge Unit]

The hinge unit of the second embodiment according to the invention is realized by arranging the image sensor 34 of the camera unit that is arranged in the hollow shaft 12 of the above described hinge device of the first or second embodiment to the outside of the hollow shaft 12 and combined with the hinge device.

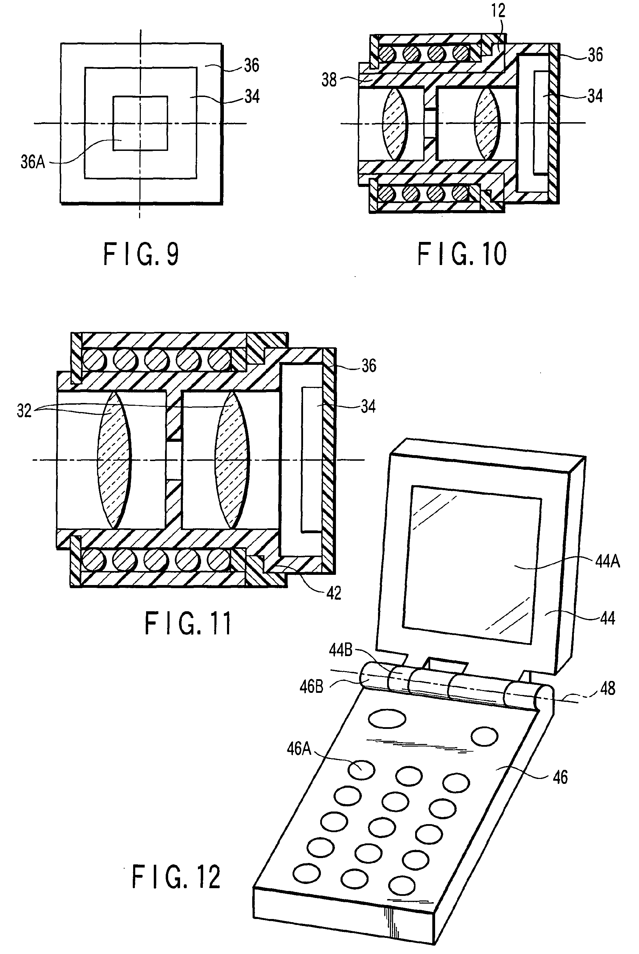

As shown in FIG. 9, the image sensor 34 comprises a light receiving section 34A that includes a large number of light receiving elements and a processing section arranged around the light receiving section 34A for the purpose of transmitting the electric signal from the light receiving section 34A to the downstream. Additionally, the hinge unit requires a lid plate 36 that operates as substrate for mounting the image sensor 34 thereon. Thus, from the viewpoint of optical design, the diameter of an image sensor section as a combination of the image sensor 34 and the lid plate 36 is greater than the outer diameter of the lens required for focusing an image on the light receiving section 34A.

Thus, the diameter of the hollow shaft 12 of the hinge device is defined by the outer diameter of the lens when the image sensor section is arranged outside the hollow shaft 12 of the hinge device. Then, as a result, it is possible to reduce the external dimensions of the hinge unit comprising a camera unit.

It will be clear by comparing FIG. 7 illustrating the hinge unit of the first embodiment and FIG. 10 illustrating the hinge unit of this embodiment that the hinge unit of this embodiment shows a smaller outer diameter of the hinge device although it combines a hinge device and a camera unit that are same as those of the hinge unit of the first embodiment.

### [Third Embodiment of Hinge Device and Third Embodiment of Hinge Unit]

Now, the third embodiment of hinge device and the third embodiment of hinge unit according to the invention will be described below. In the hinge unit of this embodiment, the hollow shaft of the hinge device of the first or second embodiment is made to operate also as the lens barrel of the camera unit.

As shown in FIG. 11, the lens barrel 42 of the camera unit typically takes the role of the hollow shaft 12 of the hinge device of FIG. 1.

As a result of arranging the lens group 32 directly in the hollow shaft in this way, it is possible to further reduce the diameter of the hinge unit.

### [First Embodiment of Electronic Appliance]

Now, the first embodiment of electronic appliance according to the invention will be described below. The first embodiment of electronic appliance according to the invention is a foldable and portable telephone set that is equipped with a camera unit. Of course, the conceivable field of application of electronic appliance according to the invention includes not only foldable and portable telephone sets but also note type personal computers, portable information terminals, digital cameras and other apparatus comprising two cabinets that are linked to each other by means of a hinge device and can be opened and closed relative to each other.

As shown in FIG. 12, the portable telephone set comprises an upper cabinet 44, which is a first member having a display section 44A such as an LCD, and a lower cabinet 46, which is a second member having switches 46A that operate as keys of a keyboard, the upper cabinet 44 and the lower cabinet 46 being linked to each other by means of a rotary shaft 48 so as to be folded and opened relative to each other.

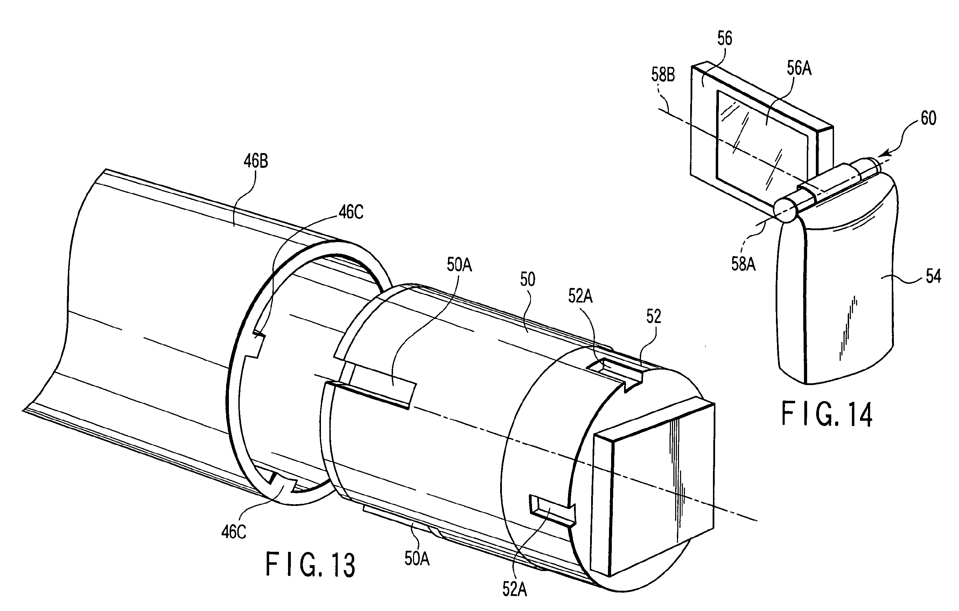

FIG. 13 illustrates the configuration of a pivot section. As shown in FIG. 13, a shaft section 46B of the lower cabinet 46 is provided on the inner periphery thereof with a projection 46C. The hinge device, or the hinge unit, of any of the first through third embodiments is provided on the sleeve 50 thereof, which corresponds to the above described sleeve 20, with a recess 50A having a profile that matches the projection 46C of the shaft section 46B. Thus, the shaft section 46B and the hinge device, or the hinge unit, revolve together. Although not shown, the shaft section 46B has an axial aperture for exposing the functional member mounted in the hinge device.

Although not shown specifically, the hinge device, or the hinge unit, is provided at the opposite side thereof with a recess 52A having a profile that matches the projection (not shown) arranged on the shaft section 44B of the upper cabinet 44 so as to make the bearing 52, which corresponds to the above described bearing 10, engage and revolve together with the shaft section 44B of the upper cabinet 44.

### [Second Embodiment of Electronic Appliance]

Now, the second embodiment of electronic appliance according to the invention will be described below. The second embodiment of electronic appliance according to the invention is a foldable and portable telephone set that is equipped with a camera unit.

As shown in FIG. 14, the portable telephone set comprises a lower cabinet 54 and an upper cabinet 56 having a display section 56, the lower cabinet 54 and the upper cabinet 56 being linked to each other by means of the hinge unit of any of the first through third embodiments having a cabinet opening/closing rotary shaft 58A and an upper cabinet rotary shaft 58B. As pointed out above, the camera unit 60 is mounted in the hollow shaft of the hinge device of any of the first through third embodiments.

When the functional member mounted in the hinge device is a camera unit, the user generally holds the lower cabinet 54 in a manner as shown in FIG. 14. Then, the camera unit, the camera lens in particular, is preferably aligned with the holding section. Therefore, although not shown specifically, the camera unit is arranged at a predetermined position in and aligned with the hollow shaft 12 of the hinge device. This arrangement can be realized by forming a projection and a matching recess respectively on part of the end facet or the inner surface of the hollow shaft 12 and on the outside of the lens barrel 38 of the camera unit 60 in such a way that the hollow shaft 12 and the lens barrel 38 can be assembled only in a predetermined direction. This arrangement is sufficient for achieving the necessary alignment because the sleeve 20 cannot revolve relative to the hollow shaft 12 as described above by referring to the first embodiment of electronic appliance.

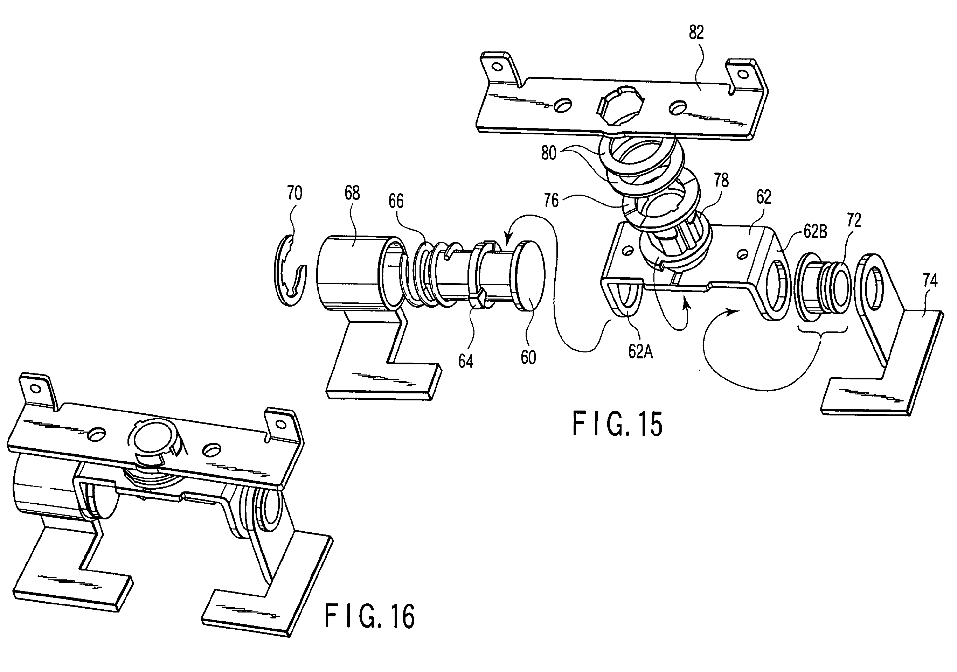

Now, the process of combining the hinge unit with the electronic appliance will be discussed by referring to FIGS. 15 and 16. FIG. 15 is an exploded schematic perspective view of the hinge unit and FIG. 16 is a schematic perspective view of the assembled hinge unit.

Firstly, frame 62, which is the first member having a bearing section 62A corresponding to the bearing 10 for instance, is fitted to the camera unit 60. Then, a cam plate 64 that corresponds to the cam plate 14 for instance, a spring 66 that corresponds to the spring 16 for instance and a lower left frame 68 to be used for the lower cabinet as the second member having a sleeve corresponding to the above described sleeve 20, are fitted to the camera unit 60. Thereafter, an anti-release E-ring 70 that corresponds to the E-ring 18 for instance is rigidly secured to the camera unit.

Another bearing section 62B is similarly arranged at the opposite side of the frame 62. A hollow shaft 72 is made to run through the bearing section 62B and the lower right frame 74 to be used for the lower cabinet is caulked. Note that the right side hinge is a hinge that does not have any click mechanism.

The frame 62 is provided with a cam section (not shown) that matches a rotary cam plate 76. The rotary hollow shaft 78 is made to rotabably run through the frame 62 and then through the rotary cam plate 76, a coned disk spring 80 and an upper cabinet frame 82. In this way, the rotary hollow shaft 78 and the upper cabinet frame 82 are rigidly secured to each other so that they may not revolve relative to each other.

The upper cabinet frame 82 is fitted to the upper cabinet 56 of the electronic appliance and the lower left frame 68 to be used for the lower cabinet and the lower right frame 74 to be used for the lower cabinet are fitted to the lower cabinet 54.

As a result, the upper cabinet 56 and the lower cabinet 54 of the electronic appliance can be opened and closed relative to each other by means of the hinge device having the cabinet opening/closing rotary shaft 58A that operates as the central axis of the camera unit 60 and that of the hollow shaft 72. The upper cabinet 56 can be rotated around its axis of revolution that agrees with the central axis of the hollow shaft 78. The hollow shafts 72, 78 provide spaces for containing wire extending from various components of the electronic appliance.

### [Fourth Embodiment of Hinge Device, Fourth Embodiment of Hinge Unit and Third Embodiment of Electronic Appliance]

The fourth embodiment of hinge device and that of hinge unit according to the invention are adapted to removably contain a functional member. The functional member of the embodiments is a conversion lens to be fitted to the front end of a camera to modify the characteristics of the lens of the camera. The conversion lens may be a close-up lens that provides the camera with a close-up feature, a wide conversion lens for modifying the view angle of the lens of the camera, a tele-conversion lens or some other lens.

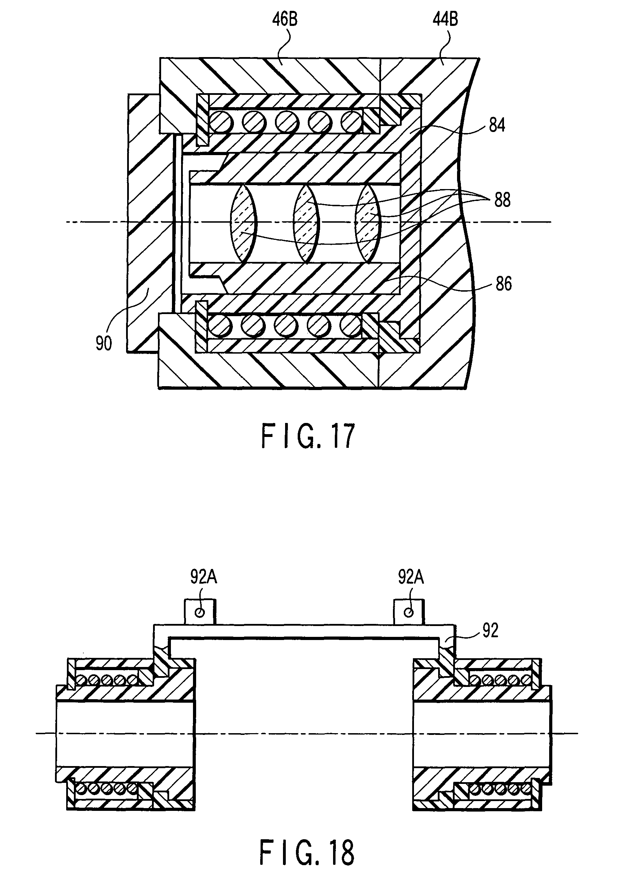

As shown in FIG. 17, the hinge device of this embodiment, or the hinge unit of this embodiment, is typically fitted to the shaft section 46B of the lower cabinet 46 and also to the shaft section 44B of the upper cabinet 44 of an electronic appliance.

The hollow shaft 84 of the hinge device of this embodiment shows a profile produced by closing the aperture of the hollow shaft 12 or 24 of the hinge device of the first or second embodiment, whichever appropriate, located at the side of the bearing 10 or 22, whichever appropriate so as to prevent the conversion lens that is formed by a lens barrel 86 and a lens 88 and contained in the hollow shaft 84 from falling into the shaft section or the inside of the electronic appliance through the aperture.

In the hinge device of this embodiment, or the hinge unit of this embodiment, a lid 90 is removably fitted to the shaft section 46B of the lower cabinet 46 of the electronic appliance. The lid 90 operates to prevent the conversion lens mounted in the hollow shaft 84 of the hinge device from inadvertently falling. Although not shown, the lid 90 is devised so as not to be easily removed from the shaft section 46B, although it is removably fitted to the shaft section 46B.

If the electronic appliance of the third embodiment having the hinge unit of the above-described configuration is a portable telephone set as illustrated in FIG. 12, in the camera mounted in the appliance (not shown), the lens may be so arranged that its surface is exposed at the side opposite to the display section 44A of the upper cabinet 44. Then, the user can enjoy a wide choice of images to be shot if he or she takes out the conversion lens mounted in the hollow shaft 84 of the hinge device and attach it to the camera. Although not shown, any of various techniques including the use of a screw may be used to attach the conversion lens to the camera.

When a camera unit is arranged in the hinge device as in the case of the portable telephone set illustrated in FIG. 14, it is possible to rigidly secure the camera unit to the hinge device located at a side of the cabinet opening/closing rotary shaft 58A and removably arrange a conversion lens in the hinge device located at the opposite side as in the case of this embodiment.

### [Fifth Embodiment of Hinge Device, Fifth Embodiment of Hinge Unit and Fourth Embodiment of Electronic Appliance]

The hinge device of this embodiment and the hinge unit of this embodiment have a plurality of hollow sections. The electronic appliance of this embodiment comprises such a hinge device or a hinge unit.

More specifically, as shown in FIG. 18, two hinge devices of any of the first through fourth embodiments, those of the first embodiment for instance, are used to form a unified bearing 92 that operates integrally as a single hinge device.

With this arrangement, it is possible to partly extend the bearing 92 and form fitting holes 92A so as to rigidly secure the bearing 92 to the cabinet of the electronic appliance without forming a recess (or a projection) that is engaged with the electronic appliance on the outer periphery of the hinge device as described above. Note that, the above- described sleeve 20 may also be provided with such a rigidly securing means.

With such a hinge device or a hinge unit, it is possible to arrange a camera unit and rigidly hold it in position in the hollow space as shown at the left side in FIG. 12 and removably arrange a conversion lens as shown in FIG. 17 in the hollow space as shown at the right side in FIG. 12 in the electronic appliance.

It is also possible to provide the hinge device with a plurality of hollow spaces and arranging respective functional members therein to raise the added value of the small electronic appliance. Each of the functional members may be rigidly secured in position or removably arranged in position. Additionally, since the hinge device is integrally formed, it is adapted to be unitized to improve the efficiency of assembling the electronic appliance.

### [Sixth Embodiment of Hinge Device, Sixth Embodiment of Hinge Unit and Fifth Embodiment of Electronic Appliance]

A functional member is rigidly arranged in one of the hollow shafts of the hinge device of this embodiment and a removable additional functional member is added to it.

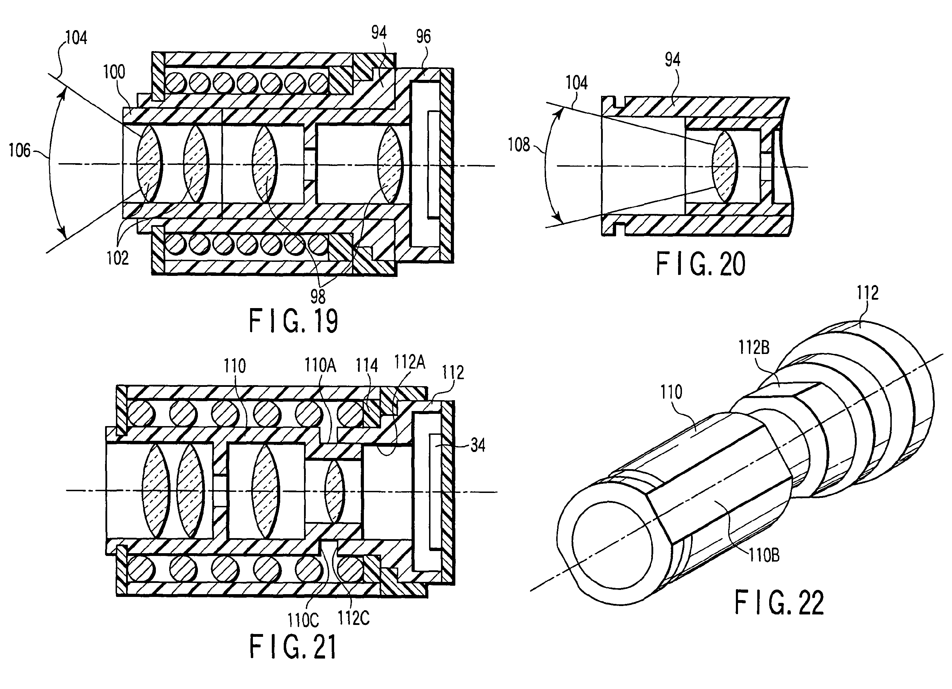

As shown in FIG. 19, the hinge unit (hinge device) of this embodiment has a configuration similar to the hinge device or the hinge unit of any of the first through third embodiments, the hinge device or the hinge unit of the first embodiment for instance. However, a camera unit comprising a lens barrel 96, a lens 98 and an image sensor section is rigidly mounted in the hollow shaft 94 thereof and a conversion lens unit comprising a different lens barrel 100 and a different lens 102 is removably mounted in the hollow shaft 94. Although not specifically illustrated, the conversion lens unit is removably mounted by means of a screw section arranged on the inner wall surface of the hollow shaft 94 and a corresponding screw section arranged in the lens barrel 100. The lens barrel 96 and the lens barrel 100 may be so formed as to be engaged with each other by means of a screw.

In this instance, the conversion lens is a wide conversion lens. With this arrangement, the camera can operate with a wide view angle 106 for the principal rays 104 as shown in FIG. 19 when the wide conversion lens is attached. On the other hand, although partly omitted but shown in FIG. 20, the view angle 108 of the lens is reduced from the wide view angle 106 when the wide conversion lens is removed. In the latter case, the principal rays 104 also have to be made free from vignetting due to the hollow shaft 94. Then, the hollow shaft 94 can operate as lens hood for preventing unnecessary rays of light from entering the camera unit.

Although not shown, it may be clear that the electronic appliance of the fifth embodiment can be realized by using the hinge device of this embodiment.

### [Seventh Embodiment of Hinge Device, Seventh Embodiment of Hinge Unit and Sixth Embodiment of Electronic Appliance]

The focal point of a camera unit of the above-described type may have to be adjusted at the time of assembling the camera unit for the purpose of operating precision. This embodiment is adapted to such focal point adjustment.

Now, the hinge device of this embodiment and the hinge unit of this embodiment will be described by referring to FIGS. 21 and 22. The hollow shaft of the hinge device of this embodiment also operates as lens barrel.

As shown in FIG. 21, in this embodiment, the lens barrel of the camera unit is divided into a lens frame 110 and a sensor frame 112. Lenses and an image sensor section are fitted respectively to the lens frame 110 and the sensor frame 112. Subsequently, the lens frame 110 and the sensor frame 112 are put together by means of a screw section 110A of the lens frame 110 and a screw section 112A of the sensor frame 112. At this time, the focal point of the camera unit is adjusted by means of the screw sections 110A, 112A in such a way that a sharp image of an object of shooting separated away from the camera unit by a predetermined distance image may be formed on the image sensor 34.

FIG. 22 illustrates the state of the camera unit when the focal point adjustment is completed. As described earlier by referring to FIG. 2, the sensor frame 112 has a revolution restricting section 112B. If the came plate 114 shown in FIG. 21 has a hole whose profile matches the cross section of the revolution restricting section 112B, the came plate 114 can be fitted to the sensor frame 112 that holds the image sensor 34 in a state where it is axially movable but cannot revolve relative to the sensor frame 112.

The operation of focal point adjustment of the lens and the image sensor 34 is conducted before fitting the click mechanism to the hinge device because of the sequence of the steps of the assembling process. Additionally, as pointed out earlier, the click mechanism is arranged around the lens frame 110, which is a hollow shaft, for the purpose of reducing the outer diameter of the hinge device. Thus, the profile of the hole of the cam plate 114 matches the external profile of the lens frame 110. However, after the focal point adjustment operation, the revolution restricting section 110B of the lens frame 110 and the revolution restricting section 112B of the sensor frame 112 may not necessarily be located at the same position in the outer peripheral direction. In order for the cam plate 114 to be able to be fitted properly in such a situation, the gap separating the end facet 110C of the lens frame 110 and the end facet 112C of the sensor frame 112 is made to be greater than the height of the cam plate 114. With this arrangement, it is possible to make the cam plate 114 allow the lens frame 110 to pass through it and rotate within the limit of the gap before it is fitted to the sensor frame 112. In other words, it is possible to mount the cam plate 114 in position regardless of the positions of the frames after the focal point adjustment operation.

Although not shown, it will be understood easily that the electronic appliance of the sixth embodiment can be formed by using the hinge device of this embodiment.

As described above by way of preferred embodiments, a hinge device according to the present invention comprises a hollow shaft and a click mechanism arranged to the outside of the hollow shaft for the hinge device so that one or more than one functional members may be arranged in the hollow shaft. With this arrangement, if a camera unit is placed in the hollow shaft as a functional member, the camera unit and the click mechanism of the hinge device are not axially arranged side by side. In other words, the axial space of an appliance can be exploited effectively to raise the value of the appliance. Additionally, if the functional member is a camera unit, the hinge device of such an electronic appliance can highly effectively be utilized to contain a conversion lens, a high definition lens that is formed by combining a large number of lenses to show a large dimension in the direction of the optical axis thereof, a zoom lens and/or a lens having an AF function, although most of which are not illustrated in the drawings.

While the present invention is described above by way of preferred embodiments, the present invention is by no means limited to the above-described embodiments, which may be modified and altered without departing from the scope of the invention to find various applications.

For example, the functional member that is arranged in each of the above-described embodiments of hinge device is a camera unit or a lens, it is also possible to arrange some other functional member in the hinge device. Examples of such functional members include a microphone, an antenna, a speaker, a battery, a connector and so on. The functional member may be a member that operates as part or all of the function added to the electronic appliance. For example, the functional member may be an entire camera unit to be used for adding the function of a camera to the electronic appliance or a lens that is part of the camera unit.

### Industrial Applicability

Thus, the present invention can find applications in the field of electronic appliances including foldable portable telephone sets, note type personal computers, portable information terminals, digital cameras and so on that comprise two cabinets that are linked to each other by means of a hinge device in such a way that the two cabinets can be opened and closed relative to each other.

## Claims

1. A hinge device for an electronic appliance for rotatably linking a first member (44; 54; 62) and a second member (46; 56; 68), **characterized in that**
a bearing section (10; 52; 62A; 92) is arranged on one of the first member and the second member and a rotary shaft section is arranged on the other member, the rotary shaft section being rotatably engaged with the bearing section; and
the rotary shaft section is provided with a hollow section for arranging a functional member (32, 34; 60; 88; 98, 102) relating to a function of the electronic appliance to which the hinge device is applied.

2. The hinge device according to claim 1, **characterized in that**
the functional member arranged in the hollow section of the rotary shaft section is a camera (60) including at least a lens (32; 98) adapted to realize the function of the camera and an optical sensor (34) for detecting light entering through a light receiving section by way of the lens.

3. The hinge device according to claim 1, **characterized in that**
the functional member arranged in the hollow section of the rotary shaft section is a lens (32; 98) adapted to realize the function of a camera and a light receiving section is arranged at an end of the rotary shaft section and an optical sensor arranging section for arranging an optical sensor (34) that detects light entering through the light receiving section is arranged at the opposite end of the rotary shaft section.

4. The hinge device according to claim 2 or 3, **characterized in that**
the camera is formed at least by the lens, the optical sensor and a lens barrel section (38; 42; 96) for holding the lens and the optical sensor; and
the rotary shaft section operates as the lens barrel section.

5. The hinge device according to claim 4, **characterized in that**
the lens barrel section includes a lens frame section (110) for holding the lens and a sensor frame section (112) for holding the optical sensor, and
the lens frame section and the sensor frame section are adapted to be linked to each other with an adjustable gap separating the lens and the optical sensor.

6. The hinge device according to claim 1, **characterized in that**
the hollow section is adapted to rigidly arrange the functional member therein.

7. The hinge device according to claim 6, **characterized in that**
the hollow section is adapted to additionally and removably arrange an additional functional member (102) that provides the functional member rigidly arranged therein with an additional function.

8. The hinge device according to claim 1, **characterized in that**
the hollow section is adapted to removably arrange the functional member therein.

9. The hinge device according to claim 1, **characterized in that**
the hollow section includes a plurality of hollow sections.

10. The hinge device according to any of claims 1 through 9, **characterized in that**
the bearing section is arranged in a first link section arranged in the first member; and
the rotary shaft section to be rotatably engaged with the bearing section is arranged in a second link section arranged in the second member;
a cam section (24A) is arranged in the rotary shaft section, a cam engaging section is arranged in the bearing section so as to be engaged with the cam section for projection/recess engagement by relative revolution of one to the other;
one of the cam section and the cam engaging section is at least adapted to axially move away from the other of the cam section and the cam engaging section, against the resilience of a resilient body (26) so as to bring the cam section into engagement with the cam engaging section for projection/recess engagement by relative revolution of one to the other caused to take place as a result of relative revolution of the rotary shaft section and the bearing section, the cam section is adapted to move away from the cam engaging section against the resilience of the resilient body at the time of release of the projection/recess engagement, and the cam section and the cam engaging section is adapted to be engaged with each other at the rotary position for projection/recess engagement by the cam engagement force and the urging pressure of the resilient body.

11. The hinge device according to any of claims 1 through 9, **characterized in that**
the bearing section is arranged in a first link section arranged in the first member; and
the rotary shaft section to be rotatably engaged with the bearing section is arranged in a second link section arranged in the second member;
a cam section (14A) is arranged in the rotary shaft section and held in engagement with the rotary shaft section so as to be revolvable with the rotary shaft section and axially movable against the resilience of a resilient body (16: 66);
a cam engaging section is arranged in the bearing section so as to brought into engagement with the cam section for projection/recess engagement as a result of relative revolution thereof;
the cam section is brought into engagement with the cam engaging section for projection/recess engagement by relative revolution of one to the other caused to take place as a result of relative revolution of the rotary shaft section and the bearing section, the cam section is adapted to move away from the cam engaging section against the resilience of the resilient body at the time of release of the projection/recess engagement, and the cam section and the cam engaging section is adapted to be engaged with each other at the rotary position for projection/recess engagement by the cam engagement force and the urging pressure of the resilient body.

12. A hinge unit for an electronic appliance for rotatably linking a first member (44; 54; 62) and a second member (46; 56; 68), **characterized in that**
a bearing section (10; 52; 62A; 92) is arranged on one of the first member and the second member and a rotary shaft section is arranged on the other member, the rotary shaft section being rotatably engaged with the bearing section;
the rotary shaft section is provided with a hollow section; and
a functional member (32, 34; 60; 88; 98, 102) relating to a function of the electronic appliance to which the hinge device is applied is arranged in the hollow section.

13. The hinge unit according to claim 12, **characterized in that**
the functional member arranged in the hollow section of the rotary shaft section is a camera (60) including at least a lens (32; 98) adapted to realize the function of the camera and an optical sensor (34) for detecting light entering through a light receiving section by way of the lens.

14. The hinge unit according to claim 12, **characterized in that**
the functional member arranged in the hollow section of the rotary shaft section is a lens (32; 98) adapted to realize the function of a camera and a light receiving section is arranged at an end of the rotary shaft section and an optical sensor arranging section for arranging an optical sensor (34) that detects light entering through the light receiving section is arranged at the opposite end of the rotary shaft section.

15. The hinge unit according to claim 13 or 14, **characterized in that**
the camera is formed at least by the lens, the optical sensor and a lens barrel section (38; 42; 96) for holding the lens and the optical sensor; and
the rotary shaft section operates as the lens barrel section.

16. The hinge unit according to claim 15, **characterized in that**
the lens barrel section includes a lens frame section (110) for holding the lens and a sensor frame section (112) for holding the optical sensor, and
the lens frame section and the sensor frame section are adapted to be linked to each other with an adjustable gap separating the lens and the optical sensor.

17. The hinge unit according to claim 12, **characterized in that**
the hollow section is adapted to rigidly arrange the functional member therein.

18. The hinge unit according to claim 17, **characterized in that**
the hollow section is adapted to additionally and removably arrange an additional functional member (102) that provides the functional member rigidly arranged therein with an additional function.

19. The hinge unit according to claim 12, **characterized in that**
the hollow section is adapted to removably arrange the functional member therein.

20. The hinge unit according to claim 12, **characterized in that**
the hollow section includes a plurality of hollow sections.

21. The hinge unit according to any of claims 12 through 20, **characterized in that**
the bearing section is arranged in a first link section arranged in the first member; and
the rotary shaft section to be rotatably engaged with the bearing section is arranged in a second link section arranged in the second member;
a cam section (24A) being arranged in the rotary shaft section, a cam engaging section being arranged in the bearing section so as to be engaged with the cam section for projection/recess engagement by relative revolution of one to the other;
one of the cam section and the cam engaging section is at least adapted to axially move away from the other of the cam section and the cam engaging section, against the resilience of a resilient body (26) so as to bring the cam section into engagement with the cam engaging section for projection/recess engagement by relative revolution of one to the other caused to take place as a result of relative revolution of the rotary shaft section and the bearing section, the cam section is adapted to move away from the cam engaging section against the resilience of the resilient body at the time of release of the projection/recess engagement, and the cam section and the cam engaging section is adapted to be engaged with each other at the rotary position for projection/recess engagement by the cam engagement force and the urging pressure of the resilient body.

22. The hinge unit according to any of claims 12 through 20, **characterized in that**
the bearing section is arranged in a first link section arranged in the first member; and
the rotary shaft section to be rotatably engaged with the bearing section is arranged in a second link section arranged in the second member;
a cam section (14A) is arranged in the rotary shaft section and held in engagement with the rotary shaft section so as to be revolvable with the rotary shaft section and axially movable against the resilience of a resilient body (16: 66);
a cam engaging section is arranged in the bearing section so as to brought into engagement with the cam section for projection/recess engagement as a result of relative revolution thereof;
the cam section is brought into engagement with the cam engaging section for projection/recess engagement by relative revolution of one to the other caused to take place as a result of relative revolution of the rotary shaft section and the bearing section, the cam section is adapted to move away from the cam engaging section against the resilience of the resilient body at the time of release of the projection/recess engagement, and the cam section and the cam engaging section is adapted to be engaged with each other at the rotary position for projection/recess engagement by the cam engagement force and the urging pressure of the resilient body.

23. An electronic appliance having a hinge device adapted to link a main body section (46; 54) provided with an operating section (46A) and an overlying section (44; 56) provided with a display section (44A, 56A) so as to lay the overlying section on the operating section so as to cover the operating section while the operating section being not in use but expose the operating section by rotating the overlying section from the overlying position relative to the operating section, **characterized in that**
the hinge device includes a bearing section (10; 52; 62A; 92) arranged on one of the main body section and the overlying section and a rotary shaft section arranged on the other section, the rotary shaft section being rotatably engaged with the bearing section; and
the rotary shaft section is provided with a hollow section for arranging a functional member (32, 34; 60; 88; 98, 102) relating to a function of the electronic appliance.

24. The electronic appliance according to claim 23, **characterized in that**
the functional member arranged in the hollow section of the rotary shaft section is a camera (60) including at least a lens (32; 98) adapted to realize the function of the camera and an optical sensor (34) for detecting light entering through a light receiving section by way of the lens.

25. The electronic appliance according to claim 23, **characterized in that**
the functional member arranged in the hollow section of the rotary shaft section is a lens (32; 98) adapted to realize the function of a camera and a light receiving section is arranged at an end of the rotary shaft section and an optical sensor arranging section for arranging an optical sensor (34) that detects light entering through the light receiving section is arranged at the opposite end of the rotary shaft section.

26. The electronic appliance according to claim 24 or 25, **characterized in that**
the camera is formed at least by the lens, the optical sensor and a lens barrel section (38; 42; 96) for holding the lens and the optical sensor; and
the rotary shaft section operates as the lens barrel section.

27. The electronic appliance according to claim 26, **characterized in that**
the lens barrel section includes a lens frame section (110) for holding the lens and a sensor frame section (112) for holding the optical sensor, and
the lens frame section and the sensor frame section are adapted to be linked to each other with an adjustable gap separating the lens and the optical sensor.

28. The electronic appliance according to claim 23, **characterized in that**
the hollow section is adapted to rigidly arrange the functional member therein.

29. The electronic appliance according to claim 28, **characterized in that**
the hollow section is adapted to additionally and removably arrange an additional functional member (102) that provides the functional member rigidly arranged therein with an additional function.

30. The electronic appliance according to claim 23, **characterized in that**
the hollow section is adapted to removably arrange the functional member therein.

31. The electronic appliance according to claim 23, **characterized in that**
the hollow section includes a plurality of hollow sections.
